(19) Europäisches Patentamt / European Patent Office / Office européen des brevets

(11) **EP 4 752 915 A1**

(12) **DEMANDE DE BREVET EUROPEEN**

(43) Date de publication:
**03.06.2026 Bulletin 2026/23**

(21) Numéro de dépôt: **25219956.7**

(22) Date de dépôt: **02.12.2025**

(51) Classification Internationale des Brevets (IPC):
**H01F 3/08** *(2006.01)* **H01F 3/10** *(2006.01)*
**H01F 3/14** *(2006.01)* **H01F 41/02** *(2006.01)*
**B22F 3/10** *(2006.01)* **B22F 7/00** *(2006.01)*
**B22F 10/10** *(2021.01)* **B33Y 10/00** *(2015.01)*
**B33Y 80/00** *(2015.01)*

(52) Classification Coopérative des Brevets (CPC):
(C-Sets disponibles)
**B22F 3/1021; B22F 7/008; B22F 10/10;**
**B33Y 10/00; B33Y 80/00; H01F 3/08; H01F 3/10;**
**H01F 3/14; H01F 41/0246;** B22F 7/002;
B22F 10/18; B22F 10/50; C22C 2202/02 (Cont.)

(84) Etats contractants désignés:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Etats d'extension désignés:
**BA**
Etats de validation désignés:
**GE KH LA MA MD TN**

(30) Priorité: **02.12.2024 FR 2413315**

(71) Demandeur: **Commissariat à l'Energie Atomique et aux Energies Alternatives**
**75015 Paris (FR)**

(72) Inventeur: **ZEKHNINI, Aziz**
**38054 Grenoble (FR)**

(74) Mandataire: **Gevers & Orès**
**Immeuble le Palatin 2**
**3 Cours du Triangle**
**CS 80165**
**92939 Paris La Défense Cedex (FR)**

(54) **PROCÉDÉ DE FABRICATION D'UN NOYAU MAGNÉTIQUE ET NOYAU MAGNÉTIQUE**

(57) L'invention concerne un procédé de fabrication d'un noyau magnétique comportant les étapes suivantes, dans l'ordre :

a) imprimer une première couche d'une pâte comportant une poudre magnétique sur un substrat,

b) créer une isolation électrique discrète sur la couche de pâte précédemment déposée,

c) imprimer une autre couche de pâte comportant une poudre magnétique sur la précédente,

d) créer une isolation électrique discrète sur la couche de pâte précédemment déposée,

e) répéter N fois les étapes c) et d), avec N un entier naturel tel que N ≥ 1,

f) imprimer une dernière couche de pâte comportant une poudre magnétique sur la précédente pour obtenir un empilement de couches avec une isolation électrique discrète entre deux couches successives,

g) effectuer un frittage de l'empilement ainsi obtenu.

[Fig. 1]

EP 4 752 915 A1

(52) Classification Coopérative des Brevets (CPC):
(Cont.)

C-Sets
B22F 2999/00, B22F 10/10, B22F 3/227

## Description

## Domaine technique de l'invention

L'invention se rapporte à la fabrication de noyaux magnétiques et aux noyaux magnétiques. De tels noyaux magnétiques peuvent en particulier trouver application dans le domaine de l'électronique de puissance, avec un intérêt particulier sur les composants passifs de convertisseurs de puissance (alimentations USB-C, centre de données (« data-centers » selon la terminologie anglo-saxonne), chargeurs de batterie, onduleurs, convertisseurs AC/DC et DC/DC).

## Arrière-plan technique

De manière générale, les noyaux magnétiques sont constitués de matériaux susceptibles d'acquérir une polarisation magnétique J sous l'effet d'un champ magnétique H (ferromagnétiques ou ferrimagnétiques).

Les performances de ces matériaux sont caractérisées par trois propriétés principales : la polarisation à saturation ($J_s$ en Teslas), la susceptibilité magnétique $\chi$ qui relie la polarisation J au champ appliqué et, la coercivité $H_c$ qui définit la largeur du cycle d'hystérésis. Les matériaux ferromagnétiques « doux » retenus préférentiellement pour les applications visées possèdent idéalement des valeurs élevées de $J_s$ et $\chi$ ($J_s > 0,3$ T et $\chi > 10$) et une valeur de coercivité faible $H_c < 100$ A/m.

Il existe une diversité de matériaux magnétiques possédant les propriétés dédiées à ce type d'application, comme (i) les alliages amorphes, nanocristallins ou cristallins à base de Fer (Fe), Cobalt (Co) et Nickel (Ni), sous forme de tôles, de rubans ou de poudre, (ii) les ferrites de structure spinelle, les hexaferrites, les grenats, etc sous forme polycristalline. Les composants électroniques comprenant ces noyaux magnétiques sont généralement sollicités en régime dynamique et leurs propriétés évoluent selon la fréquence de fonctionnement ce qui détermine en conséquence le choix des matériaux.

Outre les propriétés magnétiques, les matériaux formant les noyaux magnétiques possèdent des propriétés diélectriques d'intérêt pour les applications visées. Il s'agit par exemple de la résistivité et la constante diélectrique qui déterminent l'intensité des courants induits dans le noyau magnétique par les champs magnétiques variables.

Les performances dépendent de propriétés intrinsèques ($J_s$) des matériaux (elles-mêmes pilotées par la structure cristalline et la composition chimique) et de propriétés extrinsèques (susceptibilité, coercivité, résistivité) ajustées par la microstructure (taille des grains) ou l'architecture (composites) du matériau voire par les dimensions du noyau magnétique.

Sur ce dernier point, il est connu que la taille du noyau magnétique peut constituer une limite d'utilisation en fréquence du fait du phénomène de résonance dimensionnelle. Un phénomène de résonance dimensionnelle se produit lorsque la taille du noyau magnétique correspond à la longueur d'onde de propagation des ondes électromagnétique dans le matériau. Une telle résonance conduit à une augmentation non contrôlable des pertes et des échauffements associés dans le noyau magnétique.

Ainsi, les fabricants de noyaux magnétiques indiquent une taille limite des noyaux à ne pas dépasser pour une fréquence d'utilisation donnée.

Cette taille limite est définie par la dimension de résonance $D_R$(éq.1) qui est en fonction de la fréquence, la résistivité, la permittivité et la perméabilité propre du matériau magnétique choisi.

$$[\text{Maths 1}] \quad D_R = \frac{c}{2f\sqrt{\mu_r\sqrt{\varepsilon_r^2 + (\frac{1}{2\pi\rho f \varepsilon_0})^2}}}$$

avec :

    c, la vitesse de la lumière dans le vide ($3.10^8$ m/s)
    $\varepsilon_0$, la permittivité du vide ($8,85.10^{-12}$ F/m)
    $\varepsilon_r$, la permittivité relative
    $\rho$, la résistivité
    $\mu_r$, la perméabilité magnétique relative, et $f$, la fréquence.

A titre d'exemple pour un matériau de ferrite MnZn ($\mu_r = 10000$), la dimension de résonance vaut $D_R = 8,4$ mm à f = 0,5 MHz et $D_R = 1,85$ mm à f = 3 MHz. La valeur de dimension de résonance est faible avant d'atteindre les fréquences élevées à cause de la forte perméabilité magnétique relative.

Ceci donne donc une limite dans le dimensionnement susceptible d'être donné à un noyau magnétique, pour une fréquence de fonctionnement donnée.

Toutefois, pour obtenir une inductance de fortes valeurs (par exemple 200 $\mu$H pour une inductance de filtrage) dans un noyau magnétique et/ou pour éviter la saturation dans le noyau magnétique, il est nécessaire de concevoir des noyaux magnétiques avec des sections magnétiques importantes, donc des dimensionnements importants.

Il est donc difficile de concevoir un noyau magnétique susceptible, à haute fréquence, de fournir une inductance élevée.

Des solutions ont pourtant déjà été proposées.

Dans le document DE 10 2018 117 211 A1, la solution pour réduire les contraintes liées à la résonance dimensionnelle est basée sur l'assemblage de plusieurs anneaux fabriqués à base du même matériau de ferrite. Les anneaux de ferrite sont séparés par des anneaux de polymère de polyuréthane (non magnétique), se présentant sous la forme de couches pleines.

Cependant, pour réaliser ce type de géométrie, il faut d'abord une étape d'usinage d'anneaux de ferrite, suivie d'une étape d'usinage d'anneaux en polymère avec les mêmes dimensions que ceux en ferrite. Par ailleurs, une contrainte supplémentaire réside dans la difficulté de produire des pièces de petites dimensions en raison de la fragilité des anneaux de ferrite pendant l'usinage.

Dans l'article de S. Takahashi et al., « Experimental evaluation of the relationship between dimensional dependencies of MnZn ferrites and filter inductor impedances », Electr. Eng. Jpn., vol. 214, n° 2, p. 23302, 2021, doi: 10.1002/eej.23302, la limitation de la résonance dimensionnelle se base sur une stratification effectuée par la découpe d'un noyau magnétique fritté en plusieurs tranches. Les tranches sont ensuite empilées et assemblées. Les auteurs montrent une atténuation croissante du phénomène de résonance dimensionnelle en augmentant le nombre de noyaux laminés dans l'empilement. Avec quatre strates, les auteurs arrivent à décaler le pic de résonance de 750 kHz à 1 MHz.

Il n'y a ici pas de couche électrique isolante entre les tranches de matériau magnétique fritté, ce qui implique moins d'opérations à la fabrication.

Les documents EP 4 289 530 A1, EP 4 234 127 A1 et DE 10 2016 119 650 A1 décrivent d'autres méthodes de fabrication d'un noyau magnétique.

Toutefois, il n'en reste pas moins que la stratification par découpe des pièces frittées présente des limites importantes, telle que la restriction à des géométries simples et des épaisseurs de couches limitées aux capacités des techniques de découpe utilisées. Ainsi, la découpe par usinage conduit à des pertes de matières coûteuses et, dans le cas d'un matériau fragile, elle peut générer des fissurations susceptibles de dégrader les performances magnétiques.

Un objectif de l'invention est de proposer une solution améliorée.

**Résumé de l'invention**

Pour résoudre l'objectif précité, l'invention propose un procédé de fabrication d'un noyau magnétique comportant les étapes suivantes, dans l'ordre :

　　a) imprimer une première couche d'une pâte comportant une poudre magnétique sur un substrat,
　　b) créer une isolation électrique discrète sur la couche de pâte précédemment déposée,
　　c) imprimer une autre couche de pâte comportant une poudre magnétique sur la précédente,
　　d) créer une isolation électrique discrète sur la couche de pâte précédemment déposée,
　　e) répéter N fois les étapes c) et d), avec N un entier naturel tel que N ≥ 1,
　　f) imprimer une dernière couche de pâte comportant une poudre magnétique sur la précédente pour obtenir un empilement de couches avec une isolation électrique discrète entre deux couches successives,
　　g) effectuer un frittage de l'empilement ainsi obtenu

Grâce au procédé selon l'invention, on peut ainsi segmenter le noyau magnétique en réalisant des couches (les couches de pâte successivement déposées) de faible épaisseur (quelques mm, inférieure à $D_R$), isolées électriquement les unes des autres (isolation électrique discrète entre les couches) et assemblées entre elles (grâce au frittage entre les différentes couches là où il n'y a pas d'isolation électrique) afin d'obtenir une taille suffisante (plusieurs cm).

Aucune découpe ou usinage n'est mis en oeuvre.

Il est entendu que le terme « discrète » pour qualifier l'isolation électrique signifie que l'isolation électrique n'est pas continue à la surface de la couche de pâte magnétique précédemment déposée. Autrement dit, l'isolation électrique discrète ne se présente pas sous la forme d'une couche.

L'impression permet par ailleurs de réaliser des pièces complexes, en particulier des pièces courbes, sans limitation de géométrie et sur toute la longueur du circuit magnétique.

Le procédé selon l'invention pourra comprendre l'une au moins des étapes additionnelles suivantes, prises seules ou en combinaison :

-　pour créer l'isolation électrique discrète sur la couche de pâte précédemment déposée, on chauffe le substrat à une température supérieure à la température ambiante ;
-　pour créer l'isolation électrique discrète sur la couche de pâte précédemment déposée, on créée par action mécanique un ensemble discret de micropores en surface de ladite couche ;
-　pour créer l'isolation électrique discrète sur la couche de pâte précédemment déposée, on pulvérise des particules isolantes électriquement en surface de ladite couche ;
-　préalablement à l'étape a), on prépare une pâte comportant ladite poudre magnétique ;
-　la pâte comprenant un liant organique, on effectue, entre l'étape f) et l'étape g), un déliantage ;
-　le déliantage est un déliantage thermique ;
-　le déliantage est un déliantage thermique qui s'effectue à un premier palier de température, comprise entre 250°C et 600°C, sur une durée comprise entre 1h et 6h ;
-　le frittage s'effectue à un deuxième palier de température, comprise entre 900°C et 1200°C, pour une durée comprise entre 1h et 24h, en particulier entre 1h et 6h.

L'invention concerne aussi un noyau magnétique obtenu selon le procédé de l'invention, caractérisé en ce qu'il est formé de plusieurs couches d'un même matériau magnétique empilées les unes sur les autres, lesdites couches étant séparées les unes des autres par une isolation électrique discrète.

L'isolation électrique discrète séparant deux couches occupe alors une surface représentant au moins 50% et avantageusement au moins 70 % de l'interface entre les deux couches.

## Brève description des figures

D'autres objets et caractéristiques de l'invention apparaîtront plus clairement dans la description qui suit, faite en référence aux figures annexées, pour lesquelles :

La figure 1 est un schéma représentatif des différentes étapes d'un procédé selon l'invention ;

La figure 2 montre plus précisément une mise en œuvre de la première étape du procédé de la figure 1 pour fabriquer un noyau magnétique, en l'occurrence en forme de tore;

La figure 3 est une vue en coupe du noyau magnétique en forme de tore obtenu après avoir mis en œuvre l'ensemble des étapes du procédé représenté sur la figure 1 ;

La figure 4 est une représentation schématique de la vue en coupe du tore de la figure 3 ;

La figure 5 est un graphique montrant l'évolution de la viscosité d'une pâte, la pâte comprenant de la poudre magnétique utilisée pour mettre en œuvre le procédé selon l'invention, en fonction du taux de cisaillement appliqué à cette pâte ;

La figure 6 est un graphique représentant l'évolution de la perméabilité réelle et imaginaire en fonction de la fréquence, pour un noyau magnétique obtenu conformément à l'invention et pour un noyau magnétique obtenu avec un procédé de fabrication de l'art antérieur ;

La figure 7 est un graphique représentant l'évolution de pertes magnétiques en fonction de la fréquence, sous champ magnétique fixé, pour les mêmes noyaux magnétiques que ceux de la figure 6 ;

La figure 8 est un schéma représentatif d'une étape propre à un deuxième mode de réalisation de l'invention ;

La figure 9 est un schéma représentatif d'une étape propre à un troisième mode de réalisation de l'invention.

## Description détaillée de l'invention

De manière générale, l'invention concerne un procédé de fabrication d'un noyau magnétique comportant les étapes suivantes, dans l'ordre :

a) imprimer une première couche d'une pâte comportant une poudre magnétique sur un substrat,
b) créer une isolation électrique discrète sur la couche de pâte précédemment déposée,
c) imprimer une autre couche de pâte comportant la poudre magnétique sur la précédente,
d) créer une isolation électrique discrète sur la couche de pâte précédemment déposée,
e) répéter N fois les étapes c) et d), avec N un entier naturel tel que N ≥ 1,
f) imprimer une dernière couche de pâte comportant la poudre magnétique sur la précédente pour obtenir un empilement de couches avec une isolation électrique discrète entre deux couches successives,
g) effectuer un frittage de l'empilement ainsi obtenu.

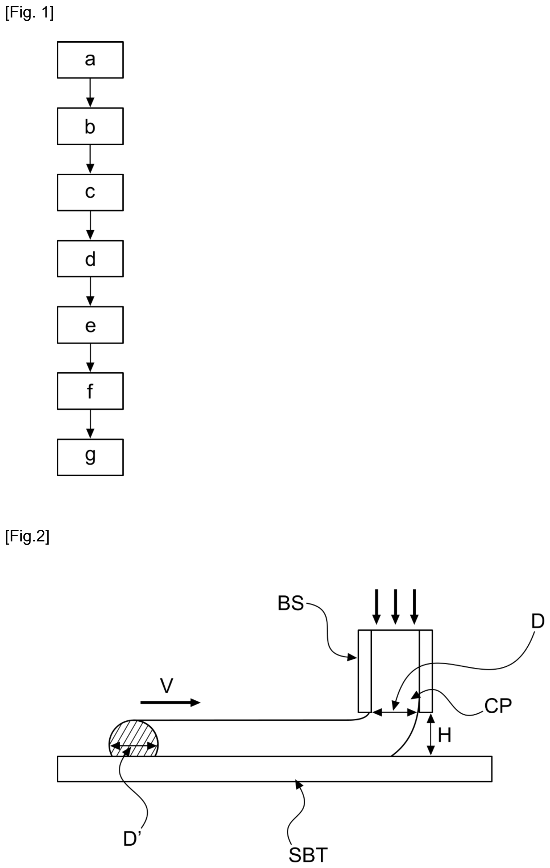

Les différentes étapes de ce procédé sont représentées sur la figure 1.

Quel que soit le mode de réalisation envisagé, la poudre magnétique peut être une poudre d'un matériau ferromagnétique ou ferrimagnétique. Plus généralement, on peut envisager (i) des alliages amorphes, nanocristallins ou cristallins à base de Fer (Fe), Cobalt (Co) et Nickel (Ni) (par exemple sous forme de tôles, de rubans ou de poudre), (ii) les ferrites de structure spinelle, les hexaferrites, les grenats ou autres sous forme polycristalline

En revanche, plusieurs modes de réalisation du procédé sont envisageables pour créer l'isolation électrique discrète entre les couches successives du noyau magnétique (étapes b), d) et leurs N répétitions).

Dans un premier mode de réalisation, l'isolation électrique discrète est obtenue en chauffant le substrat à une température supérieure à la température ambiante.

Avantageusement, le substrat est chauffé à une température strictement supérieure à la température ambiante et jusqu'à 100°C. En particulier, le substrat peut être chauffé à une température comprise entre 30°C et 80°C.

La chaleur dégagée par le substrat se propage à travers le cordon de pâte déposé et facilite le séchage de la pâte. Avec un certain niveau de température, cela génère des micropores dans les zones d'interface entre les couches déposées successivement. Ces micropores sont remplis d'air, ou d'un autre gaz comme le diazote selon l'atmosphère dans lequel le procédé de fabrication est mis en œuvre, et sont conservés lors du frittage.

Les figures 2 à 5 viennent illustrer ce premier mode de réalisation, en l'occurrence dans le cas de la fabrication d'un noyau magnétique sous forme de tore.

La figure 2 montre comment l'étape a) d'impression d'une première couche de pâte est effectuée, à température ambiante, sur le substrat SBT, quant à lui chauffé à une température supérieure à la température ambiante. Sur cette figure, on voit par ailleurs la buse d'impression BS, un cordon de pâte CP (dont le diamètre D, pris au niveau de la buse correspond à celui du diamètre interne de la buse d'impression) extrudé de la buse et déposé à une vitesse V donnée et depuis une certaine hauteur H (distance entre l'extrémité de la buse et le substrat). Ces différents paramètres sont des paramètres réglables qui caractérisent la géométrie des différentes couches successivement déposées et donc au final du noyau magnétique. En particulier la hauteur H peut être inférieure au diamètre D, de sorte que la buse BS elle-même puisse contraindre mécaniquement le cordon de pâte à prendre une largeur D' supérieure au diamètre D.

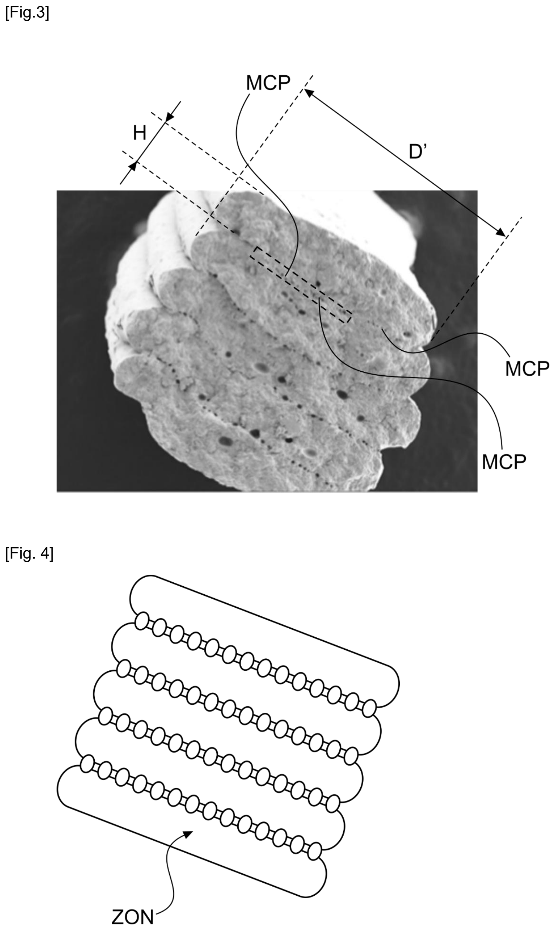

Sur la figure 3, on a d'ailleurs une vue en coupe d'un noyau magnétique, en l'occurrence sous forme de tore (forme non limitative pour mettre en œuvre l'invention) après avoir mis en œuvre l'ensemble des étapes du procédé. On comprend que l'étape e) a été répété N = 2 fois pour obtenir au final 5 couches. Les micropores MCP sont localisés au niveau des différentes interfaces entre couches successives, et se trouvent sur toute la largeur desdites couches à savoir entre le diamètre interne du tore et le diamètre externe du tore. Cela présente un intérêt en utilisation pour le noyau magnétique puisque les différentes couches sont séparées dans la direction du flux magnétique destiné à prendre place dans le tore (cette direction est celle de l'axe longitudinal du tore, perpendiculaire au diamètre) : cela génère une segmentation permettant d'atténuer la résonance dimensionnelle.

Enfin, la figure 4 est une représentation schématique de la figure 3 permettant de mieux visualiser les zones ZON d'isolation électrique discrètes entre deux couches successives.

On comprend que l'impression permet d'obtenir toutes les géométries que l'on souhaite, sans limites particulières. Le noyau magnétique est segmenté en plusieurs couches dans son épaisseur, avec des isolations électriques discrètes, ce qui permet de fonctionner à haute fréquence sans rencontrer de problème de résonance dimensionnelle et dans le même temps, son épaisseur totale reste réglable avec le nombre N de couches déposées, ce qui permet en utilisation de concevoir des noyaux à forte inductance.

Un exemple de réalisation selon ce premier mode de réalisation est fourni ci-après.

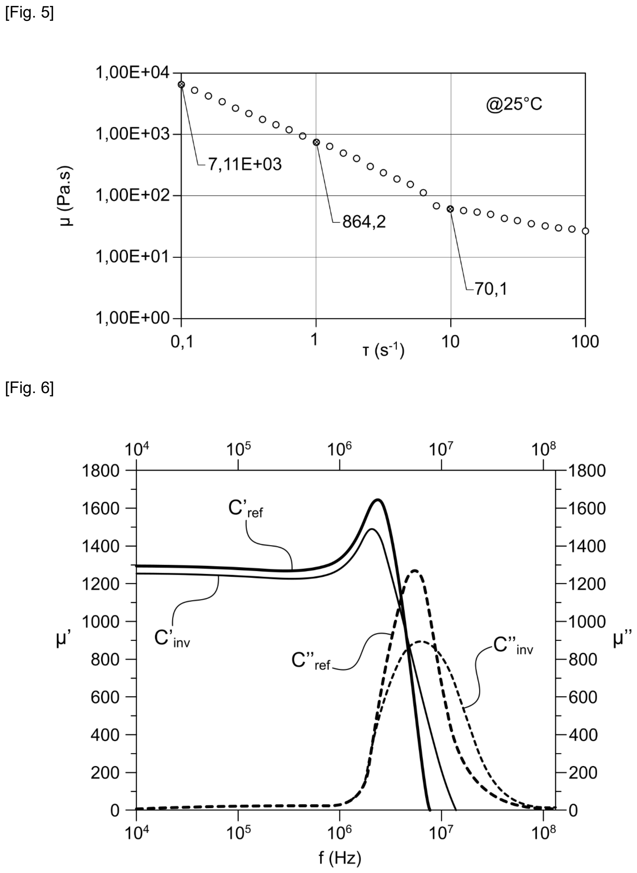

On s'intéresse ici à la fabrication d'un noyau magnétique à base de ferrite MnZn. La pâte est réalisée à partir d'une solution liquide (eau déionisée) comprenant les additifs suivants : acide polyvinylique (PVA, Acros Organics, Etats-Unis - la formulation chimique est : [-CH2CH(OH)-]n), Pluronic® F-127 (Sigma Aldrich, France - il s'agit d'un copolymère tribloc PEO-PPO de formule chimique (C3H60.C2H40)x et Disperbyk® 111 (BYK, Allemagne - il s'agit d'un ensemble d'acides) et à laquelle est ajoutée une poudre de ferrite MnZn, à savoir $(MnZn)Fe_2O_4$, avec une granulométrie comprise entre 10 et 130 microns. Le Disperbyk® 111 est un additif permettant de disperser la poudre de ferrite dans la solution liquide. Le Pluronic® F-127 est un liant organique qui se transforme en pâte à partir d'une température de 18°C. On peut ainsi réaliser une pâte à partir d'une solution liquide en contrôlant la température du milieu. Par ailleurs, on peut agiter la pâte ce qui permet de la cisailler de manière contrôlée et finalement de lui conférer une certaine viscosité. Sur la figure 5 on a d'ailleurs représenté l'évolution de la viscosité (en ordonnées) d'une pâte (température de 25°C) obtenue à partir d'une solution telle que décrite ci-dessus pour une charge massique en poudre de ferrite de 82%, en fonction du taux de cisaillement (en abscisses). Sur cette figure, on constate que la pâte présente un comportement rhéofluidifiant. On peut par ailleurs donner une forme régulière aux cordons extrudés par la buse d'impression à température ambiante (typiquement comprise entre 20°C et 25°C).

Le diamètre de la buse d'impression est fixé à 1mm. Ce diamètre de buse définit le diamètre du cordon de pâte (cylindrique) destiné à être extrait de la buse.

La hauteur d'impression (distance sortie de buse/substrat ou distance sortie de buse/couche de pâte précédemment déposée) est compris entre 0,2mm et 0,3mm. On note que cette hauteur est plus faible que le diamètre du cordon et donc que la buse permet, par une action mécanique, d'aplatir le cordon pour en faire une couche relativement plate.

La vitesse d'impression est fixée à 2mm/s. Cette vitesse permet de contrôler les déformations du cordon de pâte déposé, au regard de la viscosité de la pâte.

Le substrat est chauffé à 30°C. Ce chauffage permet de contrôler la viscosité de la pâte et participe donc, en lien avec la vitesse d'impression, à la bonne définition de la géométrie du cordon de pâte déposé. Le chauffage permet aussi d'assurer le séchage de la pâte. D'ailleurs, une fois totalement sec, le cordon déposé est rigide du fait que le Pluronic® F-127 est rigide à 30°C. Le choix de cette température permet en outre la création des porosités discrètes (isolation électrique) en surface de la couche de pâte venant d'être déposée. En effet, le séchage induit une perte de mouillabilité et d'adhérence à la surface (supérieure, opposée au substrat) de la couche venant d'être déposée qui génère des microporosités.

Dans le présent exemple, on constate la présence de micropores MCP discrets (figure 3) avec des dimensions comprises entre 8,4 et 15,6 microns (12 ± 3,6 microns).

Le déliantage permet de dégrader les additifs encore présents après l'impression. Il est en l'occurrence effectué par un traitement thermique. Pour cela, on place l'empilement de forme torique dans un four. La température du four est maintenue à un palier de 400°C pendant 4h, sous air. On peut amener le four à cette température palier depuis la température ambiante jusqu'à la valeur de 400°C avec une rampe de 0,5°C/mn. Ce déliantage est relativement lent pour éviter toute fissuration de la pièce à traiter. En effet, le déliantage libère des gaz provenant de la dégradation des additifs organiques (PVA et Pluronic® F-127).

Une fois les additifs organiques supprimés, on réalise un frittage. Ceci peut notamment s'effectuer à la suite du déliantage, dans le même four, en mettant une rampe de température permettant d'aller du palier de 400°C à un palier ici fixé à 1160°C, et maintenir cette température pendant 4h, sous air mais avec ajout de dioxygène à 0,7% (pression partielle). La rampe de température pour passer d'un palier à l'autre peut présenter une pente de 10°C toutes les 3mn. Le frittage permet de consolider et densifier la pièce afin d'augmenter la densité massique et diminuer les porosités intra-granulaire et inter-granulaire. En outre, la présence de dioxygène lors de ce frittage permet de former la phase magnétique spinelle du ferrite MnZn.

Le déliantage (thermique) et le frittage n'a pas d'effet sur les micropores qui restent présents après la fabrication.

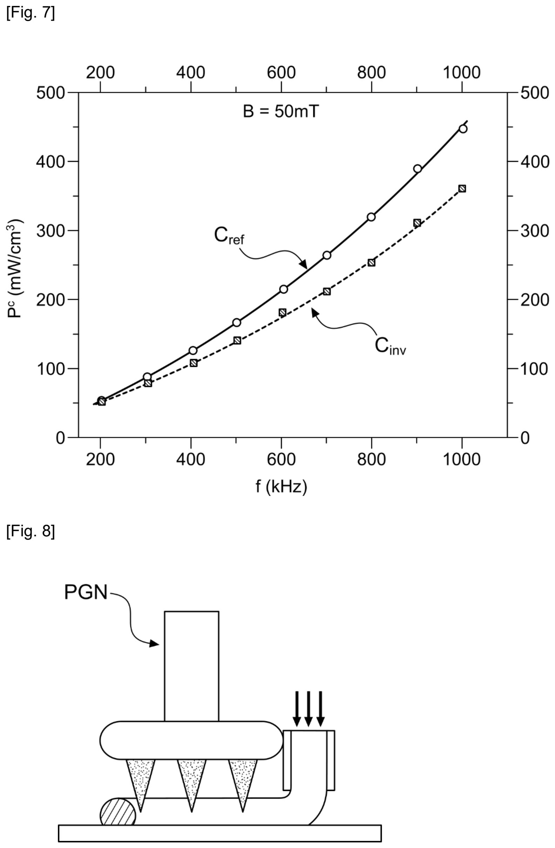

Les figures 6 et 7 fournissent des résultats relatifs au comportement magnétique d'un noyau magnétique obtenu selon le procédé selon l'invention (à savoir avec une isolation électrique discrète) et selon l'art antérieur (noyau magnétique plein).

Ainsi, la figure 6 est un graphique représentant l'évolution de la perméabilité réelle ($\mu'$) et imaginaire ($\mu''$) en fonction de la fréquence, pour un noyau magnétique obtenu conformément à l'exemple considéré (courbe $C'_{inv}$ en ligne continu pour la partie réelle et $C''_{inv}$ en lignes pointillées pour la partie imaginaire) et pour un noyau magnétique obtenu avec un procédé de fabrication de l'art antérieur (courbe $C'_{ref}$ pour la partie réelle et $C''_{ref}$ pour la partie imaginaire : noyau plein). Les courbes de perméabilité magnétique montrent l'apparition d'une fréquence de résonance de la pièce obtenue avec le procédé selon l'invention qui est supérieure à celle de la pièce selon l'art antérieur.

La figure 7 est un graphique représentant l'évolution de pertes magnétiques en fonction de la fréquence, sous champ magnétique fixé (50mT), pour les mêmes noyaux magnétiques que ceux de la figure 6. On observe que les pertes magnétiques sont plus importantes dans le noyau magnétique plein ($C_{ref}$) que dans le noyau magnétique obtenu conformément à l'invention ($C_{inv}$) obtenu lorsque les fréquences deviennent plus élevées. Ceci montre également l'intérêt de mettre en œuvre l'invention.

Dans un deuxième mode de réalisation, pour créer une isolation électrique discrète entre deux couches successives du noyau magnétique, on créée par action mécanique, après chaque dépôt d'une couche de pâte, un ensemble discret de micropores en surface de ladite couche.

L'action mécanique peut notamment, à titre d'exemple non limitatif, être effectuée par un outil en forme de peigne PGN dont les dents indentent (ou poinçonnent) la surface de la pâte déposée (cordon) pour créer des creux qui seront recouverts ultérieurement par un autre cordon, formant ainsi des cavités fermées qui présentent les mêmes caractéristiques que les micropores.

Une telle étape est illustrée sur la figure 8.

Le noyau magnétique obtenu à l'issue de la fabrication présente alors des micropores qui sont répartis de manière régulière, contrairement au noyau magnétique obtenu avec le premier mode de réalisation pour lequel les micropores sont répartis de manière plus aléatoire. Le fait d'avoir une répartition régulière permet, en utilisation, de réduire l'inhomogénéité de flux magnétique généré dans le noyau magnétique.

Par ailleurs, on peut maitriser la taille des pores en fonction des caractéristiques de l'outil (dimensions) et de la profondeur d'enfoncement de l'outil dans la pâte. On peut typiquement prévoir des micropores d'une taille comprise entre 10 et 20 microns, même si plus généralement on peut se situer sur une plage allant de 10 à 500 microns pour la taille des micropores. Pour le noyau magnétique obtenu avec le premier mode de réalisation, la dimension des micropores présente une certaine dispersion (dans l'exemple fourni précédemment, on a une taille de micropores de 12 $\pm$ 3,6 microns). Le contrôle de la taille des pores permet de contrôler les performances du noyau magnétique.

On notera que, contrairement au premier mode de réalisation, le substrat reste à température ambiante lors de la mise en œuvre du procédé de fabrication selon le deuxième mode de réalisation.

Dans un troisième mode de réalisation, pour créer une isolation électrique discrète entre deux couches successives du noyau magnétique, on pulvérise des microparticules MP isolantes électriquement en surface de ladite couche, par exemple avec un pistolet PST. Ces particules s'implantent alors dans la pâte en surface de chaque couche avant d'être recouvertes par une autre couche de pâte CP. Elles restent bien entendu en place à l'issue de l'étape de déliantage puis de frittage.

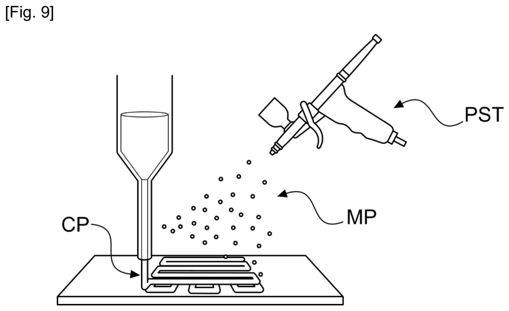

Une telle étape est illustrée sur la figure 9.

Les microparticules isolantes électriquement peuvent présenter une taille moyenne comprise entre 10 et 500 microns, en particulier entre 10 et 20 microns.

Les microparticules isolantes électriquement peuvent notamment être des oxydes métalliques. A titre d'exemples non limitatifs, on peut choisir de l'alumine ($Al_2O_3$), du dioxyde de titane ($TiO_2$), de l'oxyde de cuivre(I) ($CuO_2$), de l'oxyde de Cuivre(II) ($CuO$), de l'oxyde de zinc ($ZnO$) ou un mélange de ces différents éléments.

Contrairement aux deux premiers modes de réalisation, le noyau magnétique alors obtenu ne comporte donc pas de micropores (remplis d'air), mais des microparticules remplissant cependant la même fonction.

Les microparticules peuvent présenter une répartition avec une certaine dispersion (donc non régulière), mais pour autant pas aléatoire du fait de l'utilisation d'un spray. Quant aux dimensions des microparticules, elles peuvent également présenter une certaine dispersion qui dépendra de leur procédé de fabrication.

Finalement, quel que soit le mode de réalisation envisagé, la fabrication permet d'aboutir à un noyau magnétique formé de plusieurs couches d'un même matériau magnétique empilées les unes sur les autres, lesdites couches étant séparées les uns des autres par une isolation électrique discrète.

L'isolation électrique discrète peut se présenter sous la forme de microporosités, par exemple remplies d'air, ou de microparticules en un matériau isolant électrique.

Par ailleurs, l'isolation électrique discrète séparant deux couches occupe une surface représentant avantageusement au moins 50% de l'interface entre les deux couches. Cela permet d'avoir un effet d'isolation électrique sensible. Plus avantageusement encore, l'isolation électrique discrète séparant deux couches occupe une surface représentant au moins 70% de l'interface entre les deux couches. Ceci permet d'avoir un effet d'isolation électrique tout à fait significatif.

L'isolation électrique discrète au sein d'un même noyau magnétique peut être réalisée de manière identique, c'est-à-dire qu'une seule et même technique est employée pour créer l'isolation électrique discrète entre deux couches de pâte comportant de la poudre magnétique tout au long du procédé de fabrication du noyau magnétique. La technique précitée peut être celle employée dans l'un des trois modes de réalisation précédemment décrits.

En variante, l'isolation électrique discrète au sein d'un même noyau magnétique peut être le résultat de plusieurs techniques pour créer l'isolation électrique discrète sur la couche de pâte magnétique précédemment déposée. Par exemple, à l'étape b), la technique utilisée peut être celle du premier mode de réalisation et, à l'étape d), la technique utilisée peut être celle du deuxième mode de réalisation ou du troisième mode de réalisation. Autrement dit, chaque isolation électrique discrète créée sur la couche de pâte magnétique précédemment déposée peut être obtenue à partir d'une technique différente.

**Revendications**

1. Procédé de fabrication d'un noyau magnétique comportant les étapes suivantes, dans l'ordre :

   a) imprimer une première couche d'une pâte comportant une poudre magnétique sur un substrat,
   b) créer une isolation électrique discrète sur la couche de pâte précédemment déposée,
   c) imprimer une autre couche de pâte comportant une poudre magnétique sur la précédente,
   d) créer une isolation électrique discrète sur la couche de pâte précédemment déposée,
   e) répéter N fois les étapes c) et d), avec N un entier naturel tel que N ≥ 1,

   f) imprimer une dernière couche de pâte comportant une poudre magnétique sur la précédente pour obtenir un empilement de couches avec une isolation électrique discrète entre deux couches successives,
   g) effectuer un frittage de l'empilement ainsi obtenu.

2. Procédé de fabrication d'un noyau magnétique selon la revendication 1, dans lequel, pour créer l'isolation électrique discrète sur la couche de pâte précédemment déposée, on chauffe le substrat à une température supérieure à la température ambiante, avantageusement entre 30°C et 80 °C.

3. Procédé de fabrication d'un noyau magnétique selon l'une des revendications précédentes, dans lequel, pour créer l'isolation électrique discrète sur la couche de pâte précédemment déposée, on créée par action mécanique un ensemble discret de micropores en surface de ladite couche.

4. Procédé de fabrication d'un noyau magnétique selon l'une des revendications précédentes, dans lequel, pour créer l'isolation électrique discrète sur la couche de pâte précédemment déposée, on pulvérise des particules isolantes électriquement en surface de ladite couche.

5. Procédé de fabrication d'un noyau magnétique selon l'une des revendications précédentes, dans lequel, préalablement à l'étape a), on prépare une pâte comportant ladite poudre magnétique.

6. Procédé de fabrication selon l'une des revendications précédentes, dans lequel la pâte comprenant un liant organique, on effectue, entre l'étape f) et l'étape g), un déliantage.

7. Procédé selon la revendication précédente, dans lequel le déliantage est un déliantage thermique.

8. Procédé de fabrication d'un noyau magnétique selon la revendication précédente, dans lequel le déliantage est un déliantage thermique qui s'effectue à un premier palier de température, comprise entre 250°C et 600°C, sur une durée comprise entre 1h et 6h.

9. Procédé de fabrication d'un noyau magnétique selon l'une des revendications précédentes, dans lequel le frittage s'effectue à un deuxième palier de température, comprise entre 900°C et 1200°C, pour une durée comprise entre 1h et 24h, en particulier entre 1h et 6h.

10. Noyau magnétique obtenu selon le procédé de l'une quelconque des revendications précédentes, **ca-**

**ractérisé en ce qu'**il est formé de plusieurs couches d'un même matériau magnétique empilées les unes sur les autres, lesdites couches étant séparées les unes des autres par une isolation électrique discrète.

11. Noyau magnétique selon la revendication précédente, dans lequel l'isolation électrique discrète séparant deux couches occupe une surface représentant au moins 50% et avantageusement au moins 70 % de l'interface entre les deux couches.

[Fig. 1]

[Fig.2]

[Fig.3]

[Fig. 4]

[Fig. 5]

[Fig. 6]

[Fig. 7]

[Fig. 8]

[Fig. 9]

# EP 4 752 915 A1

**RAPPORT DE RECHERCHE EUROPEENNE**

Europäisches Patentamt
European Patent Office
Office européen des brevets

**Numéro de la demande**

EP 25 21 9956

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | EP 4 289 530 A1 (FRAUNHOFER GES FORSCHUNG [DE]) 13 décembre 2023 (2023-12-13) | 1,5-11 | INV. H01F3/08 |
| Y | * abrégé * | 4 | H01F3/10 |
| A | * alinéa [0001] - alinéa [0045]; revendications 1-10; figure 1 * | 2,3 | H01F3/14 H01F41/02 B22F3/10 |
| Y | EP 4 234 127 A1 (SIEMENS AG [DE]) 30 août 2023 (2023-08-30) | 1,4-11 | B22F7/00 B22F10/10 |
| A | * abrégé * * alinéa [0001] - alinéa [0066]; revendications 1-12; figures 1-3 * | 2,3 | B33Y10/00 B33Y80/00 |
| X | DE 10 2016 119650 A1 (HOCHSCHULE AALEN [DE]) 19 avril 2018 (2018-04-19) | 10,11 | |
| Y | * abrégé * * revendications 1-9,15; figures 1-4 * | 1,4-11 | |

-----

-----

-----

**DOMAINES TECHNIQUES RECHERCHES (IPC)**

H01F
C22C
B22F

Le présent rapport a été établi pour toutes les revendications

| Lieu de la recherche | Date d'achèvement de la recherche | Examinateur |
|---|---|---|
| Munich | 26 mars 2026 | Kardinal, Ingrid |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

 

& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 25 21 9956

La présente annexe indique les membres de la famille de brevets relatifs aux documents  brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

26-03-2026

| Document brevet cité au rapport de recherche | Date de publication | Membre(s) de la famille de brevet(s) | Date de publication |
|---|---|---|---|
| EP  4289530       A1 | 13-12-2023 | DE 102022205759 A1 | 07-12-2023 |
|  |  | EP      4289530 A1 | 13-12-2023 |
| EP  4234127       A1 | 30-08-2023 | CN    118742404 A | 01-10-2024 |
|  |  | EP      4234127 A1 | 30-08-2023 |
|  |  | EP      4401901 A1 | 24-07-2024 |
|  |  | US  2025157728 A1 | 15-05-2025 |
|  |  | WO  2023160969 A1 | 31-08-2023 |
| DE 102016119650 A1 | 19-04-2018 | AUCUN |  |

Pour tout renseignement concernant cette annexe : voir Journal Officiel de l'Office européen des brevets, No.12/82

EPO FORM P0460

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- DE 102018117211 A1
- EP 4289530 A1
- EP 4234127 A1
- DE 102016119650 A1

**Littérature non-brevet citée dans la description**

- **S. TAKAHASHI et al.** Experimental evaluation of the relationship between dimensional dependencies of MnZn ferrites and filter inductor impedances. *Electr. Eng. Jpn.*, 2021, vol. 214 (2), 23302